# DEMANDE DE BREVET EUROPEEN

(11) **EP 1 083 394 A1**
(43) Date de publication de la demande: **14.03.2001**
(21) Numéro de dépôt: 00102520.4
(22) Date de dépôt: 07.02.2000
(51) Int. Cl.: F25B 15/02

(54) **Procédé et dispositif de refroidissement par absorption**

(30) Priorité: 08.09.1999 EP 99810805
(71) Demandeur: Indtec Industrialisation et Technologie S.A., 1950 Sion (CH)
(72) Inventeur: Bruzzo, Vital, San Germano dei Berici (Vicenza) (IT)
(74) Mandataire: Wenger, Joel-Théophile

(57) **Abrégé**

Lors de l'utilisation de systèmes utilisant le principe de l'absorption pour la génération de froid, il existe un grand retard entre le démarrage de l'installation et la production de froid. Ce retard est dû au temps nécessaire à la production de vapeur.

Selon l'invention, il est proposé un dispositif de stockage de liquide réfrigérant sous pression qui est utilisé en lieu et place des vapeurs produites par un bouilleur (1) lors du démarrage de l'installation. Ce stockage est effectué dans un réservoir (4) commandé par deux vannes, l'une dite vanne amont (3) et l'autre dite vanne aval (5).

Selon l'invention, la méthode consiste à stocker du liquide réfrigérant sous pression dans un réservoir et d'utiliser ce liquide sous pression lors du démarrage de l'installation.

## Description

La présente invention concerne un procédé et un dispositif pour la génération de froid par absorption, et plus particulièrement un procédé et un dispositif pour l'accélération de la mise en route du processus de refroidissement.

Un système de refroidissement par absorption comprend schématiquement un générateur, un évaporateur et un condenseur. Pour fonctionner, le générateur est rempli d'un mélange d'au moins deux substances miscibles ci-après dénommé mélange binaire (un réfrigérant et un absorbant). Ce mélange est combiné dans un absorbeur, dans lequel l'absorption du réfrigérant par l'absorbant a lieu. Le réfrigérant et l'absorbant doivent avoir une pression d'évaporation suffisamment différente pour que, lorsque le générateur est chauffé, le plus volatil des deux, soit le réfrigérant, s'évapore et se transforme en un liquide dans le condenseur.

Le système à absorption inclut usuellement une pompe pour retourner le mélange binaire de l'absorbeur vers le générateur. Les vapeurs passent par le condenseur qui les condensent en un liquide, lequel est amené vers la valve d'expansion de l'évaporateur pour l'effet de refroidissement souhaité.

Ce principe étant basé sur l'échauffement du mélange binaire, le processus de démarrage est relativement lent. En effet, la température du mélange binaire doit s'élever de plusieurs dizaines de degré avant de se transformer en vapeur. Tant que la vapeur n'est pas produite, la fonction de refroidissement demeure sans effet.

Ainsi, l'objet de la présente invention est de permettre la génération du froid dès la mise en fonction du système de refroidissement.

Ce but est atteint par un dispositif de stockage du réfrigérant sous pression dans un réservoir prévu à cet effet, et par un contrôle d'accès audit réservoir par l'intermédiaire de deux vannes.

Selon l'invention, le mélange sous pression est accumulé dans un réservoir au cours du fonctionnement normal du système de refroidissement. Un fois le système stoppé, ce réfrigérant sous pression est stocké dans le réservoir grâce à la fermeture des vannes en amont et en aval du réservoir. Ce dernier se trouve donc isolé du circuit de refroidissement et conserve ainsi le réfrigérant sous pression.

Dès la mise en fonction du système de refroidissement, cette pression va être utilisée pour alimenter en liquide réfrigérant sous pression, le circuit de refroidissement et ainsi immédiatement produire du froid. A cet effet, la vanne en aval en direction de l'évaporateur, sera ouverte, alors que celle en amont, du côté du condenseur, est maintenue fermée. Cette dernière reste fermée tant que la pression à la sortie du condenseur est plus basse que celle dans le réservoir.

Un fois le processus de génération de vapeur opérationnel, la vanne amont laisse passer le réfrigérant sous pression qui va, d'une part, alimenter l'évaporateur et d'autre part, remplir le réservoir pour une prochaine utilisation.

L'invention sera mieux comprise grâce à la description détaillée qui va suivre en se référant au dessin annexé qui est donné à titre d'exemple nullement limitatif, dans lequel le dispositif de stockage du réfrigérant sous pression est représenté.

Dans cette figure, le générateur 1 utilise comme source d'énergie une résistance électrique. Le mélange réfrigérant-absorbant est chauffé et le plus volatil des deux composants, soit le réfrigérant, est transformé en vapeur. Ces vapeurs sont condensées en un liquide dans le condenseur 2. Le liquide sous pression arrive ensuite dans la vanne amont 3 qui permet d'accéder au réservoir 4. Cette vanne amont 3 peut, par exemple, être commandée électriquement par un dispositif qui mesure les différentes pressions. Il peut également s'agir d'une vanne différentielle qui s'ouvre dès que la pression amont excède la pression aval. Elle fonctionne donc comme anti-retour.

En aval du réservoir 4, une deuxième vanne 5 est nécessaire pour le fonctionnement de l'ensemble. Cette vanne est en général commandée par l'alimentation du système. Dès que le système de refroidissement est interrompu, elle est immédiatement fermée pour maintenir la pression dans le réservoir 4. De la même manière, dès que le système est enclenché, elle s'ouvre pour que le réfrigérant sous pression puisse alimenter l'évaporateur 7 par la vanne d'expansion 6.

Le réfrigérant est ensuite amené dans l'absorbeur 8 qui le mélange avec l'absorbant pour être réinjecté dans le générateur 1.

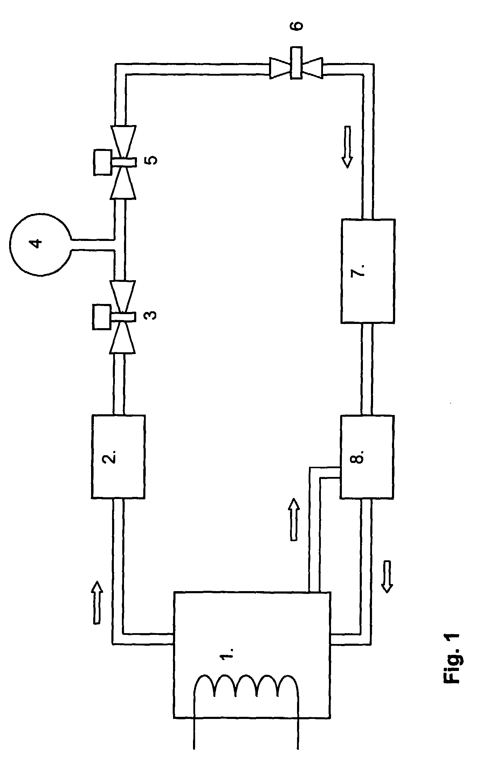

La chaleur générée dans le générateur 1 peut avoir différentes origines. Selon la représentation de la figure 1, elle peut être d'origine électrique ou peut provenir d'autres sources de chaleur, par exemple provenir des gaz d'échappement d'un moteur à combustion.

Selon une forme d'exécution, il est possible d'ajouter une vanne supplémentaire pour l'accès au réservoir afin de ne pas ralentir la mise en route du processus dans le cas où le réservoir est vide. Cette vanne ne s'ouvre que lorsque le système produit suffisamment de liquide sous pression afin de pouvoir en stocker une partie dans ledit réservoir.

Selon une forme particulière de l'invention, il est possible, lors de l'arrêt du système de refroidissement, de fermer la vanne aval 5 avant de stopper la production de vapeur. Ainsi, une surpression est produite dans le condenseur, surpression qui va être stockée dans le réservoir 4. Lorsque la pression souhaitée est atteinte, le générateur 1 est déclenché. Cette surpression accumulée dans le réservoir 4 va pouvoir produire plus longtemps du froid lors d'un prochain redémarrage du système.

## Revendications

1. Système de production de froid par absorption comprenant un générateur (1), un condenseur (2), un évaporateur (7), une valve d'expansion (6) et un absorbeur (8), caractérisé en ce qu'il comprend un ensemble de stockage de liquide réfrigérant sous pression composé d'au moins un réservoir (4), d'une vanne (3) en amont dudit réservoir (4) et d'une vanne (5) en aval dudit réservoir (4).

2. Système selon la revendication 1, caractérisé en ce que la vanne amont (3) est passante dès lors que la pression amont est plus grande ou égale à la pression aval.

3. Système selon les revendications 1 ou 2, caractérisé en ce que la vanne aval (5) est bloquée dès que le générateur cesse de produire de la vapeur.

4. Méthode de production de froid par absorption comprenant les étapes suivantes:
- chauffage d'un mélange réfrigérant-absorbant jusqu'à l'évaporation du réfrigérant dans un bouilleur (1),
- condensation des vapeurs de réfrigérant sous forme liquide dans un condenseur (2),
- détente du réfrigérant sous pression dans un évaporateur (7),
- absorption du réfrigérant détendu avec l'absorbant dans l'absorbeur (8);
caractérisée en ce qu'elle comprend de plus les étapes de:
- stockage du réfrigérant sous forme liquide dans un réservoir (4) placé entre le condenseur (2) et l'évaporateur (7),
- ouverture d'une vanne aval (5) dès que la production de froid est souhaitée, le réservoir déversant le liquide sous pression dans l'évaporateur (7) pour produire du froid
- ouverture d'une vanne amont (3) uniquement lorsque la pression à la sortie du condenseur (2) est supérieure à la pression dans le réservoir (4)
- fermeture de la vanne aval (5) dès lors que le bouilleur ne produit plus de vapeur.

5. Méthode selon la revendication 4, caractérisée en ce que la vanne aval (5) est fermée peu avant l'arrêt de production de vapeur, la surpression de liquide réfrigérant ainsi générée étant accumulée dans le réservoir (4).
